# EUROPÄISCHE PATENTSCHRIFT

(11) **EP 1 951 997 B1**
(45) Veröffentlichungstag und Bekanntmachung des Hinweises auf die Patenterteilung: **14.10.2009**
(21) Anmeldenummer: 06807810.4
(22) Anmeldetag: 13.11.2006
(51) Int. Cl.: F01N 3/20, B01D 53/94, C01B 3/02, C01C 1/04

(54) **ABGASNACHBEHANDLUNGSANLAGE UND VERFAHREN ZUM BETRIEB EINER ABGASNACHBEHANDLUNGSANLAGE**
EXHAUST GAS AFTER-TREATMENT SYSTEM AND METHOD FOR OPERATING AN EXHAUST GAS AFTER-TREATMENT SYSTEM
INSTALLATION DE POST-TRAITEMENT DE GAZ D'ECHAPPEMENT ET PROCEDE DE FONCTIONNEMENT ASSOCIE

(30) Priorität: 14.11.2005 DE 102005054129; 27.12.2005 DE 102005062556; 24.04.2006 DE 102006018955; 04.05.2006 DE 102006020693; 09.05.2006 DE 102006021490; 11.05.2006 DE 102006021987; 12.05.2006 DE 102006022385; 17.05.2006 DE 102006022992; 18.05.2006 DE 102006023338; 14.09.2006 DE 102006043105
(43) Veröffentlichungstag der Anmeldung: 06.08.2008
(73) Patentinhaber: ROBERT BOSCH GMBH, 70442 Stuttgart (DE)
(72) Erfinder: GLOECKLE, Markus, 70192 Stuttgart (DE)
(86) Internationale Anmeldenummer: PCT/EP2006/068378
(87) Internationale Veröffentlichungsnummer: WO 2007/054571

(56) Entgegenhaltungen:
- DE-A1- 10 128 414
- DE-A1- 10 237 777
- US-A1- 2005 022 450

## Beschreibung

### Stand der Technik

Die Erfindung betrifft eine Abgasnachbehandlungsanlage für eine Brennkraftmaschine mit einem Abgaskanal, wobei dem Abgaskanal von einem Reduktionsmittel-Generierungssystem erzeugtes Ammoniak zur Reduktion von Stickoxiden an einer Zumischstelle vor einem SCR-Katalysator zuführbar ist, wobei das Reduktionsmittel-Generierungssystem entlang eines zu der Zumischstelle führenden Gaswegs aus einer Multitron-Einheit, die aus einer Stickoxid-Erzeugungseinheit, einer Gemischbildungskammer und einer Oxidationsreformierungseinheit (cPOx) besteht, und einer in dem Gasweg angeordneten kombinierten Stickoxid -Speicher / Ammoniak-Erzeugungseinheit aufgebaut ist und wobei der Multitron-Einheit über eine Luft-/Abgas-Zuführung und eine Kraftstoff-Zuführung Ausgangsstoffe zur Erzeugung des Ammoniaks zumindest zeitweise zuführbar sind.

Die Erfindung betrifft weiterhin ein Verfahren zum Betrieb einer Abgasnachbehandlungsanlage für eine Brennkraftmaschine mit einem Abgaskanal, wobei dem Abgaskanal von einem Reduktionsmittel-Generierungssystem erzeugtes Ammoniak zur Reduktion von Stickoxiden an einer Zumischstelle vor einem SCR-Katalysator zugeführt wird, wobei das Reduktionsmittel-Generierungssystem entlang eines zu der Zumischstelle führenden Gaswegs aus einer Multitron-Einheit, die aus einer Stickoxid-Erzeugungseinheit, einer Gemischbildungskammer und einer Oxidationsreformierungseinheit (cPOx) besteht, und einer in dem Gasweg angeordneten kombinierten Stickoxid -Speicher / Ammoniak-Erzeugungseinheit aufgebaut ist und wobei der Multitron-Einheit über eine Luft-/Abgas-Zuführung und eine Kraftstoff-Zuführung Ausgangsstoffe zur Erzeugung des Ammoniaks zumindest zeitweise zugeführt werden.

Eine solche Abgasnachbehandlugsanlage und ein solches Verfahren zum Betrieb einer Abgasnachbehandlungsanlage sind z.B. aus der DE 102 37 777 A1 bekannt.

Die selektive katalytische Reduktion (SCR) kann zur Verringerung der NOₓ-Emission von Verbrennungsmotoren, insbesondere von Dieselmotoren, mit zeitlich überwiegend magerem, d.h. sauerstoffreichem Abgas eingesetzt werden. Hierbei wird dem Abgas eine definierte Menge eines selektiv wirkenden Reduktionsmittels zugegeben. Dies kann beispielsweise in Form von Ammoniak sein, welches direkt gasförmig zudosiert wird oder auch aus einer Vorläufersubstanz in Form von Harnstoff oder aus einer Harnstoff-Wasser-Lösung (HWL) gewonnen wird.

In der DE 10139142 A1 ist ein Abgasreinigungssystem einer Brennkraftmaschine beschrieben, bei dem zur Verringerung der NOₓ-Emission ein SCR-Katalysator eingesetzt ist, der die im Abgas enthaltenen Stickoxide mit dem Reagenzmittel Ammoniak zu Stickstoff reduziert. Das Ammoniak wird in einem stromaufwärts vor dem SCR-Katalysator angeordneten Hydrolyse-Katalysator aus der Harnstoff-Wasser-Lösung (HWL) gewonnen. Der Hydrolyse-Katalysator setzt den in der HWL enthaltenen Harnstoff zu Ammoniak und Kohlendioxid um. In einem zweiten Schritt reduziert das Ammoniak die Stickoxide zu Stickstoff, wobei als Nebenprodukt Wasser erzeugt wird. Der genaue Ablauf ist in der Fachliteratur hinreichend beschrieben worden (vgl. WEISSWELLER in CIT (72), Seite 441-449, 2000). Die HWL wird in einem Reagenzmitteltank bereitgestellt.

Nachteilig bei diesem Verfahren ist, dass HWL beim Betrieb der Brennkraftmaschine verbraucht wird. Dabei liegt der Verbrauch bei 2-4% des Kraftstoffverbrauchs. Die Versorgung mit Harnstoff-Wasser-Lösung müsste entsprechend großflächig, zum Beispiel an Tankstellen, sichergestellt sein. Ein weiterer Nachteil des Verfahrens liegt in dem notwendigen Betriebstemperaturbereich. Die Hydrolysereaktion der Harnstoff-Wasser-Lösung findet quantitativ erst ab Temperaturen von 200°C statt. Diese Temperaturen im Abgas werden beispielsweise bei Dieselmotoren erst nach längerer Betriebsdauer erreicht. Aufgrund von Abscheidungen kann es bei Temperaturen unterhalb von 200°C zu Verstopfungen an der Dosiereinheit kommen, welche die Zufuhr der Hamstoff-Wasser-Lösung in den Abgastrakt zumindest behindern. Weiterhin kann eine Zudosierung der Harnstoff-Wasser-Lösung bei Temperaturen unter 200°C auf Grund einer Polymerisation zur Hemmung der notwendigen katalytischen Eigenschaften am Hydrolysekatalysator oder am SCR-Katalysator führen.

In der DE 199 22 961 C2 ist eine Abgasreinigungsanlage zur Reinigung des Abgases einer Verbrennungsquelle, insbesondere eines Kraftfahrzeug-Verbrennungsmotors, wenigstens von darin enthaltenen Stickoxiden mit einem Ammoniakerzeugungskatalysator zur Erzeugung von Ammoniak unter Verwendung von Bestandteilen wenigstens eines Teils des von der Verbrennungsquelle emittierten Abgases während Ammoniakerzeugungs-Betriebsphasen und einem dem Ammoniakerzeugungskatalysator nachgeschalteten Stickoxidreduktionskatalysator zur Reduktion von im emittierten Abgas der Verbrennungsquelle enthaltenen Stickoxiden unter Verwendung des erzeugten Ammoniaks als Reduktionsmittel beschrieben. Dabei ist eine verbrennungsquellenexteme Stickoxid-Erzeugungseinheit zur Anreicherung des dem Ammoniakerzeugungskatalysator zugeführten Abgases mit von ihr erzeugtem Stickoxid während der Ammoniakerzeugungs-Betriebsphasen vorgesehen. Als Stickoxid-Erzeugungseinheit ist beispielsweise ein Plasmagenerator zur plasmatechnischen Oxidation von in einem zugeführten Gasstrom enthaltenem Stickstoff in Stickoxid vorgeschlagen. Der zur Ammoniakerzeugung benötigte Wasserstoff wird während der Ammoniakerzeugungs-Betriebsphasen durch den Betrieb der Verbrennungsquelle mit einem fetten, d.h. kraftstoffreichen Luftverhältnis erzeugt.

Ein plasmachemisches Verfahren zur Erzeugung einer wasserstoffreichen Gasmischung ist in der WO 01/14702 A1 beschrieben. Dabei wird in einem Lichtbogen eine fette Kraftstoff-Luft-Mischung, vorzugsweise unter POx-Bedingungen, behandelt.

Um das Mitführen eines weiteren Betriebsstoffes zu vermeiden, wurde inzwischen in einer noch unveröffentlichten Schrift der Anmelderin ein Plasmaverfahren zur On-Board-Generierung von Reduktionsmitteln vorgeschlagen. Dabei wird der zur Reduktion der Stickoxide notwendige Ammoniak aus ungiftigen Substanzen bedarfsgerecht im Fahrzeug hergestellt und anschließend dem SCR-Prozess zugeführt. Eine bezüglich des Kraftstoffverbrauchs akzeptable Lösung bietet dabei ein diskontinuierlich betriebenes Verfahren zur Ammoniakerzeugung, wie dies ebenfalls in dieser Schrift vorgeschlagen wird. Dabei wird das Reduktionsmittel Ammoniak pulsförmig bereitgestellt. Die dazu benötigte Vorrichtung wird im Folgenden als Reduktionsmittel-Generierungssystem bezeichnet.

Innerhalb des Reduktionsmittel-Generierungssystems wird während einer Magerphase in einer Stickoxid-Erzeugungseinheit Stickoxid erzeugt und in einer Stickoxid-Speicher/Ammoniak-Erzeugungseinheit zwischengespeichert. In einer an die Magerphase anschließenden Fettphase wird in einer Gemischbildungskammer und einer anschließenden Oxidationsreformierungseinheit aus Kraftstoff und Luft ein wasserstoffreiches und kohlenmonoxidreiches Gasgemisch erzeugt und in der Stickoxid-Speicher/Ammoniak-Erzeugungseinheit mit dem dort gespeicherten Stickoxid zu Ammoniak umgesetzt.

Nachteilig bei dem Verfahren ist, dass für die Erzielung hoher Ammoniak-Ausbeuten an der Stickoxid-Speicher-/Ammoniak-Erzeugungseinheit große Lambda-Tiefen, beispielsweise mit einem Lambda von 0,42, und/oder eine hinreichend lange Reduktionsdauer erforderlich sind. Beides kann zu einer Überdosierung des Reduktionsmittels und damit zu einer erhöhten Kohlenmonoxid- beziehungsweise Wasserstoff-Emission in den Abgaskanal der Brennkraftmaschine führen. Auch während der Startphase des Reduktionsmittel-Generierungssystems, wenn die Stickoxid-Speicher/Ammoniak-Erzeugungseinheit noch nicht die für eine optimale Ammoniak-Erzeugung notwendige Temperatur aufweist, ist ein erhöhter Kohlenmonoxidschlupf aus dem Reduktionsmittel-Generierungssystem in den Abgaskanal möglich. Da an einem kommerziellen SCR-Katalysator, wie er in dem Abgaskanal vorgesehen ist, praktisch kein Kohlenmonoxid zu Kohlendioxid umgesetzt wird, erhöht das in dem Reduktionsmittel-Generierungssystem erzeugte Kohlenmonoxid die gesamte Kohlenmonoxidemission der Anlage.

Es ist daher Aufgabe der Erfindung, eine Abgasnachbehandlungsanlage mit einem Reduktionsmittel-Generierungssystem und ein Verfahren zum Betrieb einer solchen Abgasnachbehandlungsanlage bereit zu stellen, die eine reduzierte Kohlenmonoxid-Emission ermöglicht.

### Offenbarung der Erfindung

### Vorteile der Erfindung

Die die Vorrichtung betreffende Aufgabe der Erfindung wird gemäß den Merkmalen des Anspruchs 1 gelöst.

Danach ist es vorgesehen, dass in dem Gasweg ein Kohlenmonoxid oxidierender Katalysator angeordnet ist. Der Kohlenmonoxid oxidierende Katalysator oxidiert das nicht für die Ammoniak-Erzeugung benötigte Kohlenmonoxid noch vor der Zuführung in den Abgaskanal der Brennkraftmaschine zu Kohlendioxid. In dem Abgaskanal selbst müssen demnach keine zusätzlichen Maßnahmen zur Verminderung des durch den Betrieb des Reduktionsmittel-Generierungssystems erzeugten Kohlenmonoxids, wie beispielsweise ein kostenintensiver Sperrkatalysators im Anschluss an den SCR-Katalysator, vorgesehen werden. Weiterhin können in dem Gasweg geeignete Bedingungen, insbesondere geeignete Temperaturen und geeignete Gaszusammensetzungen, zur Oxidation des Kohlenmonoxids erzeugt werden. Dies ist in dem Abgaskanal der Brennkraftmaschine nicht optimal möglich, da unter den dort herrschenden, netto oxidierenden Bedingungen zumindest vor dem SCR-Katalysator keine selektive Oxidation von Kohlenmonoxid neben dem ebenfalls im Abgasstrom geführten Ammoniak möglich ist und da an eventuell zur Begrenzung eines Ammoniak-Schlupfes in Strömungsrichtung nach dem SCR-Katalysator vorgesehenen Sperrkatalysatoren oftmals eine zu geringe Abgastemperatur für eine ausreichende Oxidationsaktivität herrscht.

Ist der Kohlenmonoxid oxidierende Katalysator als selektiv wirkender Katalysator ausgebildet, so wird aus dem in dem Gasweg geführten Gasstrom gezielt das enthaltene Kohlenmonoxid zu Kohlendioxid oxidiert. Andere Gasbestandteile, wie beispielsweise der nicht limitierte Wasserstoff oder das in der Stickoxid -Speicher / Ammoniak-Erzeugungseinheit erzeugte Ammoniak, können den Katalysator unverändert passieren.

Gemäß besonders bevorzugten Ausgestaltungsvarianten der Erfindung ist es vorgesehen, dass der Kohlenmonoxid oxidierende Katalysator nach der Multitron-Einheit oder nach der Stickoxid -Speicher / Ammoniak-Erzeugungseinheit angeordnet ist. Beide Varianten ermöglichen die Oxidation des in der Multitron-Einheit des Reduktionsmittel-Generierungssystems hergestellten, überschüssigen Kohlenmonoxids vor der Einleitung in den Abgaskanal der Brennkraftmaschine. Der Kohlenmonoxid oxidierende Katalysator kann als separates Bauteil speziell auf seine Aufgabe, die Oxidation von Kohlenmonoxid, optimiert werden. Weiterhin können in dem Bereich des Kohlenmonoxid oxidierenden Katalysators für die Oxidation optimale Bedingungen, wie geeignete Temperaturen und Gaszusammensetzungen, eingestellt werden. Vorteilhaft bei der Anordnung des Kohlenmonoxid oxidierenden Katalysators nach der Stickoxid-Speicher / Ammoniak-Erzeugungseinheit ist, dass die bei der Oxidation frei werdende Reaktionswärme nicht in die Stickoxid-Speicher / Ammoniak-Erzeugungseinheit eingebracht und diese damit nicht über die für die Ammoniak-Synthese optimale Betriebstemperatur aufgeheizt wird. Vorteilhaft bei der Anordnung des Kohlenmonoxid oxidierenden Katalysators vor der Stickoxid-Speicher / Ammoniak-Erzeugungseinheit ist, dass das gebildete Ammoniak nicht durch den Kohlenmonoxid oxidierenden Katalysator geleitet und somit nicht an dem Kohlenmonoxid oxidierenden Katalysator oxidiert werden kann.

Geringe Gesamtkosten für das System aus Kohlenmonoxid oxidierendem Katalysator und Stickoxid -Speicher / Ammoniak-Erzeugungseinheit lassen sich dadurch erreichen, dass der Kohlenmonoxid oxidierende Katalysator in der Stickoxid -Speicher / Ammoniak-Erzeugungseinheit integriert ist. Das integrierte Bauteil ermöglicht weiterhin im Vergleich zu zwei separaten Bauteilen einen reduzierten Platzbedarf innerhalb der Abgasnachbehandlungsanlage sowie reduzierte Montagekosten.

Eine für die Oxidation des Kohlenmonoxids geeignete Gaszusammensetzung mit dem notwendigen Anteil an Rest-Sauerstoff lässt sich dadurch erreichen, dass in Strömungsrichtung vor dem Kohlenmonoxid oxidierenden Katalysator Sauerstoff in Form von Luft und/oder Abgas zuführbar ist. Dabei bietet die Zuführung von Abgas den Vorteil, dass in Folge des reduzierten Sauerstoffgehalts und der damit verbundenen, gegenüber Luft nahezu verdoppelten notwendigen Gasmenge sowie der gegenüber Luft höheren Wärmekapazität der Temperaturanstieg an dem Katalysator, wie er durch die exotherm verlaufende Oxidation des Kohlenmonoxids bewirkt wird, deutlich geringer ausfällt als bei der Zudosierung einer bezüglich der Sauerstoffmenge äquivalenten Menge an Luft.

Desweiteren ist es vorgesehen, dass in dem Gasweg ein Kohlenmonoxid absorbierendes Bauelement vorgesehen ist. So kann das während der Fettphase der Multitron-Einheit hergestellte, überschüssige Kohlenmonoxid zwischengespeichert und zeitversetzt, beispielsweise während einer anderen, für die Oxidation des Kohlenmonoxids günstigeren Betriebsphase des Reduktionsmittel-Generierungssystems oxidiert werden. Dadurch, dass die Oxidation des Kohlenmonoxids nicht während der Fettphase der Multitron-Einheit und somit der Ammoniak-Erzeugungsphase erfolgt, kann eine parallel zur Oxidation des Kohlenmonoxids verlaufende Oxidation des Ammoniaks vermieden werden.

Gemäß einer bevorzugten Ausgestaltungsvariante der Erfindung ist es vorgesehen, dass das Kohlenmonoxid absorbierende Bauelement in der Stickoxid -Speicher / Ammoniak-Erzeugungseinheit integriert ist oder als separate Baueinheit der Stickoxid -Speicher / Ammoniak-Erzeugungseinheit in Strömungsrichtung vor- oder nachgeschaltet ist und dass in Strömungsrichtung nach dem Kohlenmonoxid absorbierenden Bauelement der Kohlenmonoxid oxidierenden Katalysator angeordnet ist. Die Integration des Kohlenmonoxid absorbierenden Bauelements in die Stickoxid-Speicher / Ammoniak-Erzeugungseinheit bietet dabei die Vorteile der niedrigen Gesamtkosten sowie der einfachen und Platz sparenden Montage. Separate Baueinheiten können hingegen auf die gewünschte Speicherfunktion besser optimiert werden und die Betriebsbedingungen können an den jeweiligen Einbaustellen weitestgehend unabhängig von den notwenigen Bedingungen zum Betrieb der Stickoxid-Speicher / Ammoniak-Erzeugungseinheit eingestellt werden. Das gespeicherte Kohlenmonoxid kann in dem nachgeschalteten Kohlenmonoxid oxidierenden Katalysator umgesetzt werden. Dabei können zwischen dem Kohlenmonoxid absorbierenden Bauelement und dem Kohlenmonoxid oxidierenden Katalysator weitere Bauelemente der Abgasnachbehandlungsanlage, beispielsweise die Stickoxid-Speicher / Ammoniak-Erzeugungseinheit, vorgesehen sein.

Ein weiterer kompakter und kostengünstiger Aufbau lässt sich dadurch erreichen, dass das Kohlenmonoxid absorbierende Bauelement in dem Kohlenmonoxid oxidierenden Katalysator integriert ist. Die Umsetzung des gespeicherten Kohlenmonoxids kann so unter den jeweils notwendigen Betriebsbedingungen direkt in dem integrierten Bauelement erfolgen.

Eine im Vergleich zu bekannten Abgasnachbehandlungssystemen mit Reduktionsmittel-Generierungssystemen gleiche Anzahl an notwendigen Komponenten kann erreicht werden, wenn das Kohlenmonoxid absorbierende Bauelement, der Kohlenmonoxid oxidierende Katalysator und die Stickoxid -Speicher / Ammoniak-Erzeugungseinheit in einem Bauteil integriert sind.

Eine für die Ammoniak-Bildung geeignete Temperatur der Stickoxid -Speicher / Ammoniak-Erzeugungseinheit, insbesondere bei Anordnungen, bei denen die exotherme Kohlenmonoxid-Oxidation in Strömungsrichtung vor oder innerhalb der Stickoxid -Speicher / Ammoniak-Erzeugungseinheit erfolgt, lässt sich dadurch erreichen, dass in Strömungsrichtung vor der Stickoxid -Speicher / Ammoniak-Erzeugungseinheit ein Kühler zur Kühlung des Gasstroms vorgesehen ist und/oder dass ein Kühler zur direkten Kühlung der Stickoxid -Speicher / Ammoniak-Erzeugungseinheit vorgesehen ist. Mit dem Kühler kann die bei der Oxidation des Kohlenmonoxids frei werdende Reaktionswärme abgeführt werden. Die Ammoniak-Bildung an der Stickoxid -Speicher / Ammoniak-Erzeugungseinheit nimmt bei zu hohen Temperaturen ab, so dass die Temperatur entsprechend begrenzt werden muss.

Die das Verfahren betreffende Aufgabe der Erfindung wird dadurch gelöst, dass in dem Gasweg eine zumindest partielle Oxidation des in dem Gasstrom enthaltenen Kohlenmonoxids erfolgt. Das durch den Betrieb des Reduktionsmittel-Generierungssystems erzeugte Kohlenmonoxid wird so bereits vor der Einleitung in den Abgaskanal der Brennkraftmaschine zu Kohlendioxid umgewandelt, was einer Zunahme der Gesamtemission an Kohlenmonoxid des Systems durch den Betrieb des Reduktionsmittel-Generierungssystems entgegenwirkt.

Dabei lässt sich eine gezielte und effiziente Umwandlung des Kohlenmonoxids dadurch erreichen, dass die zumindest partielle Oxidation des in dem Gasstrom enthaltenen Kohlenmonoxids an einem Kohlenmonoxid oxidierenden Katalysator erfolgt.

Für die Umsetzung des Kohlenmonoxids geeignete Gaszusammensetzungen lassen sich dadurch erreichen, dass dem Gasstrom vor dem Kohlenmonoxid oxidierenden Katalysator Sauerstoff in Form von Abgas und/oder Luft in einem bezogen auf den Kohlenmonoxid- und/oder Wasserstoff-Gehalt des Gasstroms unterstöchiometrischen Verhältnisses zugeführt wird.

Zur Vermeidung einer zur Umwandlung des Kohlenmonoxids parallel verlaufenden und durch den Eintrag von Sauerstoff möglichen Oxidation des in der Fettphase neben dem Kohlenmonoxid und dem Wasserstoff vorliegenden Ammoniaks kann es vorgesehen sein, dass der Sauerstoff in Form von Abgas und/oder Luft dem Gasstrom zeitlich verzögert zum Beginn einer Fettphase der Multitron-Einheit zugeführt wird. Ammoniak wird während der Fettphase der Multitron-Einheit hergestellt. Die Ammoniak-Freisetzungsrate und damit die Ammoniak-Konzentration nehmen während der Fettphase ab. Damit nimmt auch die Wahrscheinlichkeit einer parallelen Ammoniak-Oxidation mit späterem Zudosierungszeitpunkt des Abgases beziehungsweise der Luft ab. In der Praxis liegen ab einer bestimmten Dauer der Fettphase Ammoniak-Konzentrationen von lediglich kleiner 3 Prozent vor, während die Kohlenmonoxid-Konzentration 20 Prozent betragen kann.

Die Oxidation von Ammoniak wird auch dadurch vermieden, dass während einer Fettphase der Multitron-Einheit Kohlenmonoxid in einem in dem Gasweg angeordneten Kohlenmonoxid-Absorber gespeichert wird und dass in einer nachfolgenden Magerphase der Multitron-Einheit oder durch Spülen mit Luft und/oder Abgas das gespeicherte Kohlenmonoxid in dem Kohlenmonoxid oxidierenden Katalysator zu Kohlendioxid oxidiert wird.

Ist es vorgesehen, dass die über die Luft und/oder das Abgas zugeführte Sauerstoffmenge in Abhängigkeit von der Temperatur des Gasstroms und/oder der Temperatur des Kohlenmonoxid oxidierenden Katalysators und/oder der Temperatur der Stickoxid -Speicher / Ammoniak-Erzeugungseinheit geregelt wird, so kann der durch die exotherme Oxidation des Kohlenmonoxids an dem Kohlenmonoxid oxidierenden Katalysator hervorgerufene Temperaturanstieg begrenzt werden. Die Temperatur kann dabei auf die maximal zulässige Temperatur, ab der sich Ammoniak thermisch wieder zersetzten würde, beziehungsweise eine entsprechend niedrigere Temperatur begrenzt werden. Die thermische Zersetzung von Ammoniak erfolgt unter den herrschenden fetten Bedingungen bei Temperaturen oberhalb ca. 550°C.

Das Verfahren lässt sich besonders vorteilhaft bei Dieselmotoren oder bei Magermotoren einsetzen, die ein Reduktionsmittel-Generierungssystem aufweisen.

### Kurze Beschreibung der Zeichnungen

Die Erfindung wird im Folgenden anhand der in den Figuren dargestellten Ausführungsbeispiele näher erläutert. Es zeigen:
Figur 1 eine schematische Darstellung einer Abgasnachbehandlungsanlage mit einem Reduktionsmittel-Generierungssystem und einem Kohlenmonoxid oxidierenden Katalysator,
Figur 2 in einer weiteren Ausführung eine schematische Darstellung einer Abgasnachbehandlungsanlage mit einem Reduktionsmittel-Generierungssystem und einem Kohlenmonoxid oxidierenden Katalysator,
Figur 3 eine schematische Darstellung einer Abgasnachbehandlungsanlage mit einem Reduktionsmittel-Generierungssystem und einem vorverlegten Kohlenmonoxid oxidierenden Katalysator,
Figur 4 eine schematische Darstellung einer Abgasnachbehandlungsanlage mit einem Reduktionsmittel-Generierungssystem und einem Kohlenmonoxid absorbierenden Bauelement.

### Ausführungsformen der Erfindung

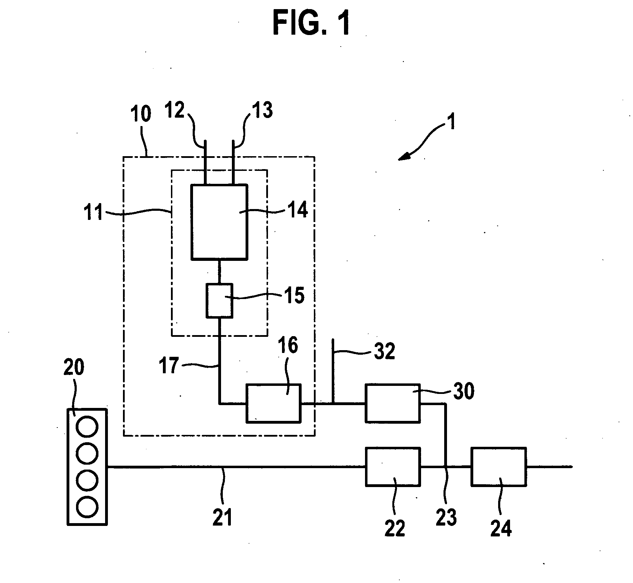

Figur 1 zeigt eine schematische Darstellung einer Abgasnachbehandlungsanlage 1 mit einem Reduktionsmittel-Generierungssystem 10 und einem Kohlenmonoxid oxidierenden Katalysator 30 am Beispiel eines Dieselmotors.

Das Abgas einer Brennkraftmaschine 20, also des Dieselmotors, ist über einen Abgaskanal 21 geführt, wobei in Strömungsrichtung des Abgases ein Partikelfilter 22 in Ausführung eines Dieselpartikelfilters und ein nachgeschalteter SCR-Katalysator 24 vorgesehen sind. Zur Reduktion von Stickoxiden ist in Strömungsrichtung vor dem SCR-Katalysator 24 an einer Zumischstelle 23 von einem Reduktionsmittel-Generierungssystem 10 hergestelltes Ammoniak als Reduktionsmittel zuführbar. SCR-Katalysatoren 24 arbeiten dabei nach dem Prinzip der selektiven katalytischen Reduktion, bei dem mittels des Reduktionsmittels Ammoniak in sauerstoffhaltigen Abgasen Stickoxide zu Stickstoff und Wasser reduziert werden.

Das Reduktionsmittel-Generierungssystem 10 weist entlang eines Gaswegs 17 eine Multitron-Einheit 11, die aus einer Stickoxid-Erzeugungseinheit 14, einer nicht dargestellten Gemischbildungskammer und einer Oxidationsreformierungseinheit 15 (cPOx) besteht, sowie eine kombinierte Stickoxid-Speicher / Ammoniak-Erzeugungseinheit 16 auf.

Der Multitron-Einheit 11 sind über eine Luft-/Abgas-Zuführung 13 und einer Kraftstoff-Zuführung 12 Ausgangsstoffe zur Erzeugung des Ammoniaks zumindest zeitweise zuführbar. Das Ammoniak wird aus Luft, Abgas oder einem Gemisch aus Luft und Abgas sowie im gezeigten Beispiel aus Dieselkraftstoff erzeugt.

Die Erzeugung von Ammoniak erfolgt innerhalb des Reduktionsmittel-Generierungssystems 10, in dem Stickstoffoxide NOₓ in einer Magerphase (λ> 1) in einem Plasma innerhalb der Stickoxid-Erzeugungseinheit 14 aus Luft erzeugt werden. Diese Stickoxide durchströmen die sich anschließende Oxidationsreformierungseinheit 15 (cPOx) und werden anschließend in dem gezeigten Beispiel der kombinierten Sticköxid-Speicher / Ammoniak-Erzeugungseinheit 16 zugeführt und gespeichert. In einer sich an die Magerphase anschließenden zweiten Betriebsphase, der Fettphase (0,33 <λ< 1), wird im Bereich der Multitron-Einheit 11 in einer nicht dargestellten Verdampfungs- und Gemischbildungszone flüssiger Kraftstoff eindosiert und in der Oxidationsreformierungseinheit 15 (cPOx) zu einem Wasserstoff- und kohlenmonoxidhaltigen Gasgemisch umgesetzt, welches anschließend im Bereich der Stickoxid-Speicher / Ammoniak-Erzeugungseinheit 16 die zuvor eingespeicherten Stickoxide zu Ammoniak umsetzt. Dieses erzeugte gasförmige Ammoniak wird dann an der Zumischstelle 23 in den Abgasstrom des Abgaskanals 21 vor dem SCR-Katalysator 24 zudosiert.

Da der SCR-Katalysator 24 eine ausgeprägte Ammoniak-Speicherfähigkeit besitzt ist es möglich, auch über ein diskontinuierliches Verfahren zur Ammoniakerzeugung kontinuierlich die Reduktion der Stickoxide mittels des SCR-Prozesses im Abgasstrom zu erreichen. Dabei setzen im Temperaturbereich zwischen 150° C und 450° C Katalysatoren aus Titandioxid (TiO₂) und Vanadium-Pentoxid (V₂O₅) die Stickoxide mit dem erzeugten Ammoniak mit hoher Rate um. Es sind hier aber auch weitere SCR-Katalysatoren 24, beispielsweise auf zeolithischer Basis, denkbar.

In dem dargestellten Ausführungsbeispiel ist in dem Gasweg 17 zwischen dem Reduktionsmittel-Generierungssystem 10 und der Zumischstelle 23 ein Kohlenmonoxid oxidierender Katalysator 30 in Form eines selektiv Kohlenmonoxid oxidierenden Katalysators angeordnet. In Strömungsrichtung vor dem Kohlenmonoxid oxidierenden Katalysator 30 ist dem in dem Gasweg 17 geführten Gasstrom über eine Luftzuführung 32 Luft und somit Sauerstoff zumindest zeitweise zugeführt. Die Luft kann dabei nicht dargestellt der Luftzuführung der Brennkraftmaschine nach einem dort vorgesehenen Luftfilter entnommen sein.

An dem Kohlenmonoxid oxidierenden Katalysator 30 wird das die Ammoniak-Bildung begleitende Kohlenmonoxid zumindest partiell zu Kohlendioxid oxidiert. Dazu kann schon während der Fettphase durch Zudosieren von Luft Sauerstoff in einem bezogen auf die Kohlendioxid- und die Wasserstoffkonzentration unterstöchiometrischen Verhältnis zugemischt werden.

Das Kohlenmonoxid, welches in dem Reduktionsmittel-Generierungssystem 10 erzeugt wird, wird so schon vor der Einleitung in den Abgaskanal 21 der Brennkraftmaschine 21 zu Kohlendioxid umgewandelt. Dies ist im Vergleich zu einer Umwandlung in dem Abgaskanal 21 der Brennkraftmaschine 20 vorteilhaft, da bei den dort herrschenden, netto oxidierenden Bedingungen zumindest vor dem SCR-Katalysator 24 keine selektive Oxidation von Kohlenmonoxid neben dem ebenfalls vorliegenden Ammoniak möglich ist. In Strömungsrichtung nach dem SCR-Katalysator insbesondere zur Begrenzung eines Ammoniak-Schlupfes verbaute Sperrkatalysatoren erhöhen zum einen die Kosten und weisen zum anderen für eine Kohlenmonoxid-Oxidation bei den dort herrschenden, oftmals sehr niedrigen Abgastemperaturen eine zu geringe Oxidationsaktivität auf.

Der Einsatz eines selektiv wirkenden Katalysators zu Oxidation des Kohlenmonoxids in dem Gasweg 17 verringert die Wahrscheinlichkeit einer nicht gewünschten Oxidation des ebenfalls in dem Gasstrom vorliegenden Ammoniaks.

Um das Risiko einer Oxidation des Ammoniaks weiter zu verringern, kann die Zudosierung der Luft und somit des Sauerstoffs zeitverzögert zum Start der Fettphase der Multitron-Einheit 11 erfolgen. Da die Ammoniak-Freisetzungsrate und damit die Ammoniak-Konzentration im Verlauf der Fettphase abnehmen, nimmt auch die Wahrscheinlichkeit einer parallelen Ammoniak-Oxidation mit späterem Zudosierungszeitpunkt ab. In der Praxis liegt nach einer längeren Fettphase die Ammoniakkonzentration in dem Gasstrom bei Werten kleiner 3%, die Kohlenmonoxid-Konzentration aber bei bis zu 20%.

Zur Begrenzung des Temperaturanstiegs durch die exotherm verlaufende Oxidation des Kohlenmonoxids über dem Kohlenmonoxid oxidierenden Katalysator 30 kann der Sauerstoffeintrag geregelt erfolgen. Die Regelung kann dabei in Abhängigkeit der Gastemperatur, der Temperatur des Kohlenmonoxid oxidierenden Katalysators 30 oder der Temperatur der Stickoxid-Speicher / Ammoniak-Erzeugungseinheit 16 erfolgen. Die zulässige Maximaltemperatur richtet sich nach der Temperatur, ab der sich Ammoniak zersetzt. Dies kann unter den herrschenden fetten Bedingungen beispielsweise ab ca. 550° erfolgen.

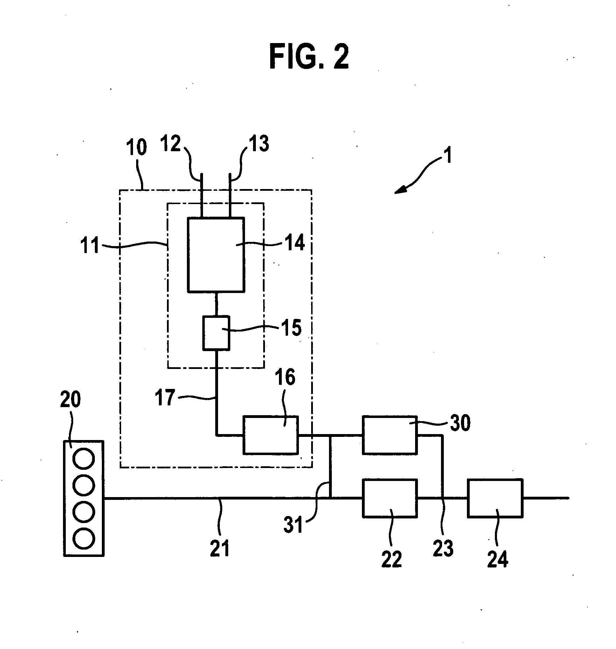

Figur 2 zeigt in einer weiteren Ausführung eine schematische Darstellung einer Abgasnachbehandlungsanlage 1 mit einem Reduktionsmittel-Generierungssystem 10 und einem Kohlenmonoxid oxidierenden Katalysator 30, wiederum am Beispiel eines Dieselmotors.

Auch hier ist in dem Gasweg 17 zwischen dem Reduktionsmittel-Generierungssystem 10 und der Zumischstelle 23 der Kohlenmonoxid oxidierender Katalysator 30 in Form eines selektiv Kohlenmonoxid oxidierenden Katalysators angeordnet. Im Gegensatz zu dem in Figur 1 dargestellten Ausführungsbeispiel ist in Strömungsrichtung vor dem Kohlenmonoxid oxidierenden Katalysator 30 dem in dem Gasweg 17 geführten Gasstrom über eine Abgaszuführung 31 Abgas aus dem Abgaskanal 21 der Brennkraftmaschine 20 zumindest zeitweise zugeführt.

Die für die Oxidation des Kohlenmonoxids notwendige Menge an Sauerstoff wird somit durch Zugabe von Abgas bereitgestellt. Auch hier erfolgt die Oxidation bei einem unterstöchiometrischen Sauerstoff-Angebot.

Die Anordnung bietet gegenüber der in Figur 1 dargestellten Anordnung den Vorteil, dass die durch die exotherm verlaufende Oxidation des Kohlenmonoxids frei werdende Wärme besser abgeführt werden kann. Zum einen ist aufgrund des reduzieren Sauerstoffgehalts des Abgases von ca. 10% eine größere Menge an zugeführtem Gas notwendig, um die benötigte Menge Sauerstoff bereit zu stellen. Durch die gegenüber einer Luftzufuhr nahezu verdoppelte Menge an Gas kann die Wärme besser abgeführt werden. Weiterhin hat Abgas im Vergleich zu Luft eine höhere Wärmekapazität, wodurch bei gleichem Energieeintrag eine geringere Temperaturerhöhung erfolgt.

Auch bei dieser Anordnung sind die unter Figur 1 beschriebenen Verfahren zur Vermeidung einer Ammoniak-Oxidation anwendbar.

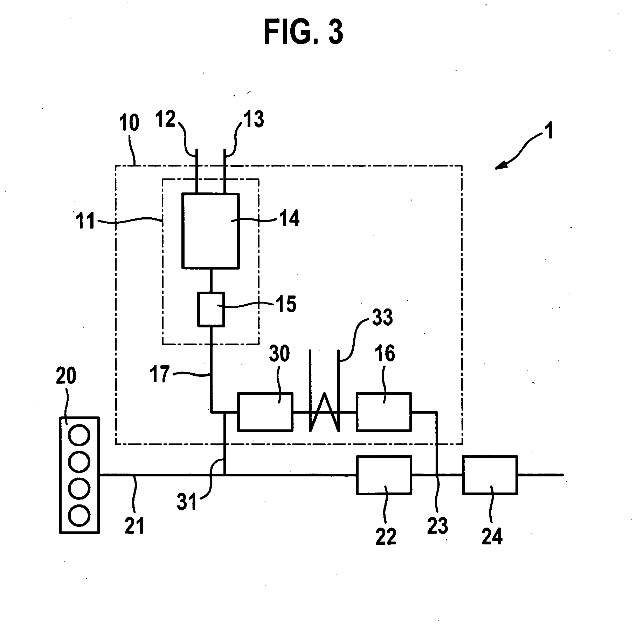

Figur 3 zeigt eine schematische Darstellung einer Abgasnachbehandlungsanlage 1 mit einem Reduktionsmittel-Generierungssystem 10 und einem vorverlegten Kohlenmonoxid oxidierenden Katalysator 30.

Im Unterschied zu der in Figur 1 dargestellten Ausführungsvariante ist der Kohlenmonoxid oxidierende Katalysator 30 in Strömungsrichtung vor der Stickoxid-Speicher-/Ammoniak-Erzeugungseinheit 16 in dem Gasweg 17 angeordnet. Zwischen dem Kohlenmonoxid oxidierenden Katalysator 30 und der Stickoxid-Speicher-/Ammoniak-Erzeugungseinheit 16 ist zusätzlich ein Kühler 33 vorgesehen.

Der zur Reduzierung des Kohlenmonoxids notwendige Sauerstoff wird über eine Abgaszuführung 31 dem Abgaskanal 21 entnommen und dem Gasweg 17 vor dem Kohlenmonoxid oxidierenden Katalysator 30 zugeführt. Abweichend zu der dargestellten Ausführungsform ist es aber auch denkbar, dass der Stauerstoff über eine Luftzuführung vor dem Kohlenmonoxid oxidierenden Katalysator 30 bereitgestellt wird.

Das während der Fettphase gebildete Kohlenmonoxid kann mit der Anordnung durch Zugabe von Abgas zumindest partiell schon vor dem Durchgang durch die Stickoxid-Speicher-/Ammoniak-Erzeugungseinheit 16 oxidiert werden. Auch hier ist die Abgaszuführung so geregelt, dass die Oxidation bei einem unterstöchiometrischen Sauerstoffangebot erfolgt.

Da der Kohlenmonoxid oxidierende Katalysator 30 vor der Stickoxid-Speicher-/Ammoniak-Erzeugungseinheit 16 angeordnet ist, wird er nicht von Ammoniak durchströmt, so dass eine Oxidation des Ammoniaks in dem Kohlenmonoxid oxidierenden Katalysator 30 vermieden werden kann. Dennoch ist es vorteilhaft, wenn die Zugabe des sauerstoffhaltigen Oxidationsmittels, in der dargestellten Ausführungsvariante des Abgases, zeitverzögert zum Start der Fettphase der Multitron-Einheit 11 erfolgt, da die Bildung von Ammoniak in der Stickoxid-Speicher-/Ammoniak-Erzeugungseinheit 16 in Gegenwart von etwaigem Rest-Sauerstoff erschwert ist.

Der Kühler 33 ist vorgesehen, um die Temperatur der Stickoxid-Speicher-/Ammoniak-Erzeugungseinheit 16 auf für Ammoniaksynthese geeignete Werte zu begrenzen. Er führt dazu die durch die exotherm verlaufende Oxidation des Kohlenmonoxids gebildete Wärme, die an dem Kohlenmonoxid oxidierenden Katalysator 30 an den Gastrom abgegeben wird, ab. Der Kühler kann, wie in dem dargestellten Beispiel gezeigt, den zu der Stickoxid-Speicher-/Ammoniak-Erzeugungseinheit 16 führenden Gasstrom abkühlen oder es kann in einer alternativen Ausführung ein Kühler zur direkten Kühlung der Stickoxid-Speicher-/Ammoniak-Erzeugungseinheit 16 vorgesehen sein.

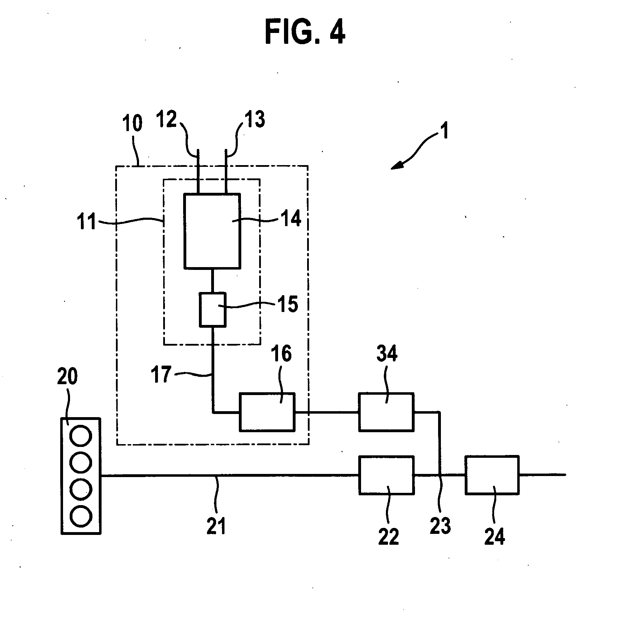

Figur 4 zeigt in einer schematische Darstellung einer Abgasnachbehandlungsanlage 1 mit einem Reduktionsmittel-Generierungssystem 10 und einem Kohlenmonoxid absorbierenden Bauelement 34.

Das Kohlenmonoxid absorbierende Bauelement 34 ist in dem Gasweg 17 zwischen der Stickoxid-Speicher-/Ammoniak-Erzeugungseinheit 16 und der Zumischstelle 23 in den Abgaskanal 21 angeordnet.

Im Gegensatz zu den in den Figuren 1, 2 und 3 dargestellten Ausführungsvarianten ist keine gesonderte Sauerstoffzufuhr in Form einer Abgaszuführung oder einer Luftzuführung vorgesehen.

Das Kohlenmonoxid absorbierende Bauelement 34 kombiniert in der dargestellten Ausführungsvariante die beiden Funktionen Absorption von Kohlenmonoxid und Katalysator zur Oxidation des Kohlenmonoxids zu Kohlendioxid.

Das während der Fettphase die Ammoniak-Bildung begleitende Kohlenmonoxid wird zumindest teilweise von dem Kohlenmonoxid absorbierenden Bauelement 34 zwischengespeichert und kann in der nachfolgenden Magerphase, in welcher in der Multitron-Einheit 11 Stickoxid erzeugt wird, aufoxidiert werden. Zur Oxidation kann der in der Magerphase in dem Gasstrom enthaltene Sauerstoff genutzt werden. Es ist weiterhin möglich, dass der Sauerstoff durch eine nicht dargestellte Luft- oder Abgaszuführung bereitgestellt wird.

Die Anordnung ermöglicht die zeitlich zur Fettphase versetzte Oxidation des Kohlenmonoxids, wodurch eine Oxidation des gebildeten Ammoniaks vermieden werden kann.

Die Kohlenmonoxid-Absorber-Funktionalität kann in einer alternativen Ausführungsform der Erfindung auch in der Stickoxid-Speicher / Ammoniak-Erzeugungseinheit 16 integriert sein oder sie kann separat der Stickoxid-Speicher / Ammoniak-Erzeugungseinheit 16 vorgeschaltet oder nachgeschaltet sein. Bei einem der Stickoxid-Speicher / Ammoniak-Erzeugungseinheit 16 vorgeschalteten Kohlenmonoxid absorbierende Bauelement 34 ist bevorzugt eine Kühlung des Reaktionsmediums in beziehungsweise vor der Stickoxid-Speicher / Ammoniak-Erzeugungseinheit 16 vorzusehen, da die Ammoniak-Bildung an der Stickoxid-Speicher / Ammoniak-Erzeugungseinheit 16 bei erhöhten Temperaturen abnimmt, so dass sich die Exothermie des Kohlenmonoxid-Abbrandes nachteilig auf die Ammoniak-Bildungsfähigkeit auswirken würde.

Alle dargestellten Varianten ermöglichen es, dass das während der Fettphase des Reduktionsmittel generierenden Systems anfallende Kohlenmonoxid noch vor der Einleitung in den Abgaskanal 21 der Brennkraftmaschine 20 zumindest partiell oxidiert wird, was zu einer deutlichen Verringerung der Kohlenmonoxid-Begleit-Emission führt.

## Patentansprüche

1. Abgasnachbehandlungsanlage (1) für eine Brennkraftmaschine (20) mit einem Abgaskanal (21), wobei dem Abgaskanal (21) von einem Reduktionsmittel-Generierungssystem (10) erzeugtes Ammoniak zur Reduktion von Stickoxiden an einer Zumischstelle (23) vor einem SCR-Katalysator (24) zuführbar ist, wobei das Reduktionsmittel-Generierungssystem (10) entlang eines zu der Zumischstelle (23) führenden Gaswegs (17) aus einer Multitron-Einheit (11), die aus einer Stickoxid-Erzeugungseinheit (14), einer Gemischbildungskammer und einer Oxidationsreformierungseinheit (15) (cPOx) besteht, und einer in dem Gasweg (17) angeordneten kombinierten Stickoxid -Speicher / Ammoniak-Erzeugungseinheit (16) aufgebaut ist und wobei der Multitron-Einheit (11) über eine Luft-/Abgas-Zuführung (13) und eine Kraftstoff-Zuführung (12) Ausgangsstoffe zur Erzeugung des Ammoniaks zumindest zeitweise zuführbar sind, **dadurch gekennzeichnet, dass** in dem Gasweg (17) ein Kohlenmonoxid oxidierender Katalysator (30) angeordnet ist und dass in dem Gasweg (17) ein Kohlenmonoxid absorbierendes Bauelement (34) vorgesehen ist.

2. Abgasnachbehandlungsanlage (1) nach Anspruch 1, **dadurch gekennzeichnet, dass** der Kohlenmonoxid oxidierende Katalysator (30) als selektiv wirkender Katalysator ausgebildet ist.

3. Abgasnachbehandlungsanlage (1) nach Anspruch 1 oder 2, **dadurch gekennzeichnet, dass** der Kohlenmonoxid oxidierende Katalysator (30) nach der Multitron-Einheit (11) oder nach der Stickoxid -Speicher / Ammoniak-Erzeugungseinheit (16) angeordnet ist.

4. Abgasnachbehandlungsanlage (1) nach einem der Ansprüche 1 bis 3, **dadurch gekennzeichnet, dass** der Kohlenmonoxid oxidierende Katalysator (30) in der Stickoxid - Speicher / Ammoniak-Erzeugungseinheit (16) integriert ist.

5. Abgasnachbehandlungsanlage (1) nach einem der Ansprüche 1 bis 4, **dadurch gekennzeichnet, dass** in Strömungsrichtung vor dem Kohlenmonoxid oxidierenden Katalysator (30) Sauerstoff in Form von Luft und/oder Abgas zuführbar ist.

6. Abgasnachbehandlungsanlage (1) nach einem der Ansprüche 1 bis 5, **dadurch gekennzeichnet, dass** das Kohlenmonoxid absorbierende Bauelement (34) in der Stickoxid -Speicher / Ammoniak-Erzeugungseinheit (16) integriert ist oder als separate Baueinheit der Stickoxid -Speicher / Ammoniak-Erzeugungseinheit (16) in Strömungsrichtung vor- oder nachgeschaltet ist und dass in Strömungsrichtung nach dem Kohlenmonoxid absorbierenden Bauelement (34) der Kohlenmonoxid oxidierenden Katalysator (30) angeordnet ist.

7. Abgasnachbehandlungsanlage (1) nach einem der Ansprüche 1 bis 6, **dadurch gekennzeichnet, dass** das Kohlenmonoxid absorbierende Bauelement (34) in dem Kohlenmonoxid oxidierenden Katalysator (30) integriert ist.

8. Abgasnachbehandlungsanlage (1) nach einem der Ansprüche 1 bis 7, **dadurch gekennzeichnet, dass** das Kohlenmonoxid absorbierende Bauelement (34), der Kohlenmonoxid oxidierende Katalysator (30) und die Stickoxid -Speicher / Ammoniak-Erzeugungseinheit (16) in einem Bauteil integriert sind.

9. Abgasnachbehandlungsanlage (1) nach einem der Ansprüche 1 bis 8, **dadurch gekennzeichnet, dass** in Strömungsrichtung vor der Stickoxid -Speicher / Ammoniak-Erzeugungseinheit (16) ein Kühler (33) zur Kühlung des Gasstroms vorgesehen ist und/oder dass ein Kühler zur direkten Kühlung der Stickoxid -Speicher / Ammoniak-Erzeugungseinheit (16) vorgesehen ist.

10. Verfahren zum Betrieb einer Abgasnachbehandlungsanlage (1) für eine Brennkraftmaschine (20) mit einem Abgaskanal (21), wobei dem Abgaskanal (21) von einem Reduktionsmittel-Generierungssystem (10) erzeugtes Ammoniak zur Reduktion von Stickoxiden an einer Zumischstelle (23) vor einem SCR-Katalysator (24) zugeführt wird, wobei das Reduktionsmittel-Generierungssystem (10) entlang eines zu der Zumischstelle (23) führenden Gaswegs (17) aus einer Multitron-Einheit (11), die aus einer Stickoxid-Erzeugungseinheit (14), einer Gemischbildungskammer und einer Oxidationsreformierungseinheit (15) (cPOx) besteht, und einer in dem Gasweg (17) angeordneten kombinierten Stickoxid -Speicher / Ammoniak-Erzeugungseinheit (16) aufgebaut ist und wobei der Multitron-Einheit (11) über eine Luft-/Abgas-Zuführung (13) und eine Kraftstoff-Zuführung (12) Ausgangsstoffe zur Erzeugung des Ammoniaks zumindest zeitweise zugeführt werden, **dadurch gekennzeichnet, dass** in dem Gasweg (17) eine zumindest partielle Oxidation des in dem Gasstrom enthaltenen Kohlenmonoxids erfolgt und dass während einer Fettphase der Multitron-Einheit (11) Kohlenmonoxid in einem in dem Gasweg (17) angeordneten Kohlenmonoxid-Absorber (34) gespeichert wird und dass in einer nachfolgenden Magerphase der Multitron-Einheit (11) oder durch Spülen mit Luft und/oder Abgas das gespeicherte Kohlenmonoxid in dem Kohlenmonoxid oxidierenden Katalysator (30) zu Kohlendioxid oxidiert wird.

11. Verfahren nach Anspruch 10, **dadurch gekennzeichnet, dass** die zumindest partielle Oxidation des in dem Gasstrom enthaltenen Kohlenmonoxids an einem Kohlenmonoxid oxidierenden Katalysator (30) erfolgt.

12. Verfahren nach Anspruch 10 oder 11, **dadurch gekennzeichnet, dass** dem Gasstrom vor dem Kohlenmonoxid oxidierenden Katalysator (30) Sauerstoff in Form von Abgas und/oder Luft in einem bezogen auf den Kohlenmonoxid- und/oder Wasserstoff-Gehalt des Gasstroms unterstöchiometrischen Verhältnisses zugeführt wird.

13. Verfahren nach einem der Ansprüche 10 bis 12, **dadurch gekennzeichnet, dass** der Sauerstoff in Form von Abgas und/oder Luft dem Gasstrom zeitlich verzögert zum Beginn einer Fettphase der Multitron-Einheit (11) zugeführt wird.

14. Verfahren nach einem der Ansprüche 10 bis 13, **dadurch gekennzeichnet, dass** die über die Luft und/oder das Abgas zugeführte Sauerstoffmenge in Abhängigkeit von der Temperatur des Gasstroms und/oder der Temperatur des Kohlenmonoxid oxidierenden Katalysators (30) und/oder der Temperatur der Stickoxid -Speicher / Ammoniak-Erzeugungseinheit (16) geregelt wird.

15. Anwendung des Verfahrens nach einem der Ansprüche 10 bis 14, **dadurch gekennzeichnet, dass** das Verfahren bei Dieselmotoren oder bei Magermotoren eingesetzt wird, die ein Reduktionsmittel-Generierungssystem (10) aufweisen.

## Claims

1. Exhaust-gas aftertreatment system (1) for an internal combustion engine (20) having an exhaust-gas duct (21), with it being possible for ammonia which is generated by a reducing agent generating system (10) to be supplied, for the reduction of nitrogen oxides, to the exhaust-gas duct (21) at a mixing point (23) upstream of an SCR catalytic converter (24), with the reducing agent generating system (10) being formed, along a gas path (17) which leads to the mixing point (23), from a Multitron unit (11), which is composed of a nitrogen oxide generating unit (14), a mixture formation chamber and an oxidation reformation unit (15) (cPOx), and from a combined nitrogen oxide storage/ammonia generating unit (16) which is arranged in the gas path (17), and with it being possible for starting materials for the generation of ammonia to be supplied to the Multitron unit (11) at least intermittently by means of an air/exhaust-gas supply (13) and a fuel supply (12), **characterized in that** a catalytic converter (30) which oxidizes carbon monoxide is arranged in the gas path (17) and **in that** a component (34) which absorbs carbon monoxide is arranged in the gas path (17).

2. Exhaust-gas aftertreatment system (1) according to Claim 1, **characterized in that** the catalytic converter (30) which oxidizes carbon monoxide is designed as a selectively acting catalytic converter.

3. Exhaust-gas aftertreatment system (1) according to Claim 1 or 2, **characterized in that** the catalytic converter (30) which oxidizes carbon monoxide is arranged downstream of the Multitron unit (11) or downstream of the nitrogen oxide storage/ammonia generating unit (16).

4. Exhaust-gas aftertreatment system (1) according to one of Claims 1 to 3, **characterized in that** the catalytic converter (30) which oxidizes carbon monoxide is integrated in the nitrogen oxide storage/ammonia generating unit (16).

5. Exhaust-gas aftertreatment system (1) according to one of Claims 1 to 4, **characterized in that** oxygen in the form of air and/or exhaust gas can be supplied, with respect to the flow direction, upstream of the catalytic converter (30) which oxidizes carbon monoxide.

6. Exhaust-gas aftertreatment system (1) according to one of Claims 1 to 5, **characterized in that** the component (34) which absorbs carbon monoxide is integrated in the nitrogen oxide storage/ammonia generating unit (16) or, as a separate component, is positioned, with respect to the flow direction, upstream or downstream of the nitrogen oxide storage/ammonia generating unit (16), and **in that** the catalytic converter (30) which oxidizes carbon monoxide is arranged, with respect to the flow direction, downstream of the component (34) which absorbs carbon monoxide.

7. Exhaust-gas aftertreatment system (1) according to one of Claims 1 to 6, **characterized in that** the component (34) which absorbs carbon monoxide is integrated in the catalytic converter (30) which oxidizes carbon monoxide.

8. Exhaust-gas aftertreatment system (1) according to one of Claims 1 to 7, **characterized in that** the component (34) which absorbs carbon monoxide, the catalytic converter (30) which oxidizes carbon monoxide and the nitrogen oxide storage/ammonia generating unit (16) are integrated in one component.

9. Exhaust-gas aftertreatment system (1) according to one of Claims 1 to 8, **characterized in that** a cooler (33) for cooling the gas flow is provided, with respect to the flow direction, upstream of the nitrogen oxide storage/ammonia generating unit (16) and/or **in that** a cooler for directly cooling the nitrogen oxide storage/ammonia generating unit (16) is provided.

10. Method for operating an exhaust-gas aftertreatment system (1) for an internal combustion engine (20) having an exhaust-gas duct (21), with ammonia which is generated by a reducing agent generating system (10) being supplied, for the reduction of nitrogen oxides, to the exhaust-gas duct (21) at a mixing point (23) upstream of an SCR catalytic converter (24), with the reducing agent generating system (10) being formed, along a gas path (17) which leads to the mixing point (23), from a Multitron unit (11), which is composed of a nitrogen oxide generating unit (14), a mixture formation chamber and an oxidation reformation unit (15) (cPOx), and from a combined nitrogen oxide storage/ammonia generating unit (16) which is arranged in the gas path (17), and with starting materials for the generation of ammonia being supplied to the Multitron unit (11) at least intermittently by means of an air/exhaust-gas supply (13) and a fuel supply (12), **characterized in that** an at least partial oxidation of the carbon monoxide which is contained in the gas flow takes place in the gas path (17) and **in that**, during a rich phase of the Multitron unit (11), carbon monoxide is stored in a carbon monoxide absorber (34) which is arranged in the gas path (17), and **in that**, in a subsequent lean phase of the Multitron unit (11) or by means of flushing with air and/or exhaust gas, the stored carbon monoxide is oxidized, in the catalytic converter (30) which oxidizes carbon monoxide, to form carbon dioxide.

11. Method according to Claim 10, **characterized in that** the at least partial oxidation of the carbon monoxide which is contained in the gas flow takes place on a catalytic converter (30) which oxidizes carbon monoxide.

12. Method according to Claim 10 or 11, **characterized in that** oxygen in the form of exhaust gas and/or air is supplied to the gas flow upstream of the catalytic converter (30) which oxidizes carbon monoxide, in a substoichiometric ratio in relation to the carbon monoxide content and/or hydrogen content of the gas flow.

13. Method according to one of Claims 10 to 12, **characterized in that** the oxygen in the form of exhaust gas and/or air is supplied to the gas flow with a time delay after the start of a rich phase of the Multitron unit (11).

14. Method according to one of Claims 10 to 13, **characterized in that** the oxygen quantity which is supplied by means of the air and/or the exhaust gas is regulated as a function of the temperature of the gas flow and/or the temperature of the catalytic converter (30) which oxidizes carbon monoxide and/or the temperature of the nitrogen oxide storage/ammonia generating unit (16).

15. Use of the method according to one of Claims 10 to 14, **characterized in that** the method is used in diesel engines or in lean-burn engines which have a reducing agent generating system (10).

## Revendications

1. Installation (1) de post-traitement des gaz d'échappement d'un moteur à combustion interne (20) qui présente un canal (21) de gaz d'échappement,
l'ammoniac destiné à la réduction des oxydes d'azote et formé par un système (10) de production d'agent réducteur pouvant être amené au canal (21) de gaz d'échappement en un emplacement de mélange (23) situé en amont d'un catalyseur SCR (24),
le système (10) de production d'agent réducteur situé le long d'un parcours de gaz (17) qui conduit à l'emplacement de mélange (23) étant constitué d'une unité (11) dite "Multitron" formée d'une unité (14) de production d'oxyde d'azote et d'une chambre de formation d'un mélange, ainsi que d'une unité (15) de reformage d'oxydation (cPOx) et d'une unité combinée (16) d'accumulation d'oxyde d'azote et de formation d'ammoniac disposée dans le parcours des gaz (17), et
des matières de départ destinées à former l'ammoniac pouvant être amenées au moins une partie du temps à l'unité Multitron (11) par une amenée (13) d'air et/ou de gaz d'échappement et par une amenée de carburant (12),
**caractérisée en ce que**
un catalyseur (30) d'oxydation du monoxyde de carbone est disposé dans le parcours des gaz (17) et
**en ce qu'**un composant (34) absorbant le monoxyde de carbone est prévu dans le parcours des gaz (17).

2. Installation (1) de post-traitement des gaz d'échappement selon la revendication 1, **caractérisée en ce que** le catalyseur (30) d'oxydation du monoxyde de carbone est configuré comme catalyseur à action sélective.

3. Installation (1) de post-traitement des gaz d'échappement selon les revendications 1 ou 2, **caractérisée en ce que** le catalyseur (30) d'oxydation du monoxyde de carbone est disposé en aval de l'unité Multitron (11) ou en aval de l'unité (16) d'accumulation d'oxyde d'azote et/ou de formation d'ammoniac.

4. Installation (1) de post-traitement des gaz d'échappement selon l'une des revendications 1 à 3, **caractérisée en ce que** le catalyseur (30) d'oxydation du monoxyde de carbone est intégré dans l'unité (16) d'accumulation d'oxyde d'azote et/ou de formation d'ammoniac.

5. Installation (1) de post-traitement des gaz d'échappement selon l'une des revendications 1 à 4, **caractérisée en ce que** de l'oxygène sous forme d'air et/ou de gaz d'échappement peut être amené en amont du catalyseur (30) d'oxydation du monoxyde de carbone dans la direction d'écoulement.

6. Installation (1) de post-traitement des gaz d'échappement selon l'une des revendications 1 à 5, **caractérisée en ce que** le composant (34) d'absorption du monoxyde de carbone est intégré dans l'unité (16) d'accumulation d'oxyde d'azote et/ou de formation d'ammoniac ou est raccordé comme composant séparé en amont ou en aval de l'unité (16) d'accumulation d'oxyde d'azote et/ou de formation d'ammoniac dans la direction d'écoulement et **en ce que** le catalyseur (30) d'oxydation du monoxyde de carbone est disposé en aval du composant (34) d'absorption du monoxyde de carbone dans la direction d'écoulement.

7. Installation (1) de post-traitement des gaz d'échappement selon l'une des revendications 1 à 6, **caractérisée en ce que** le composant (34) d'absorption du monoxyde de carbone est intégré dans le catalyseur (30) d'oxydation du monoxyde de carbone.

8. Installation (1) de post-traitement des gaz d'échappement selon l'une des revendications 1 à 7, **caractérisée en ce que** le composant (34) d'absorption du monoxyde de carbone, le catalyseur (30) d'oxydation du monoxyde de carbone et l'unité (16) d'accumulation d'oxyde d'azote et/ou de formation d'ammoniac sont intégrés en un seul composant.

9. Installation (1) de post-traitement des gaz d'échappement selon l'une des revendications 1 à 8, **caractérisée en ce qu'**elle présente un refroidisseur (33) qui refroidit l'écoulement de gaz en amont de l'unité (16) d'accumulation d'oxyde d'azote et/ou de formation d'ammoniac dans la direction d'écoulement et/ou un refroidisseur qui refroidit directement l'unité (16) d'accumulation d'oxyde d'azote et/ou de formation d'ammoniac.

10. Procédé de gestion d'une installation (1) de post-traitement de gaz d'échappement d'un moteur à combustion interne (20) doté d'un canal (21) de gaz d'échappement,
l'ammoniac destiné à la réduction des oxydes d'azote et formé par un système (10) de production d'agent réducteur étant amené au canal (21) de gaz d'échappement en un emplacement de mélange (23) situé en amont d'un catalyseur SCR (24),
le système (10) de production d'agent réducteur situé le long d'un parcours de gaz (17) qui conduit à l'emplacement de mélange (23) étant constitué d'une unité (11) dite "Multitron" formée d'une unité (14) de production d'oxyde d'azote et d'une chambre de formation d'un mélange, ainsi que d'une unité (15) de reformage d'oxydation (cPOx) et d'une unité combinée (16) d'accumulation d'oxyde d'azote et de formation d'ammoniac disposée dans le parcours des gaz (17), et
des matières de départ destinées à former l'ammoniac pouvant être amenées au moins une partie du temps à l'unité Multitron (11) par une amenée (13) d'air et/ou de gaz d'échappement et une amenée de carburant (12),
**caractérisé en ce que**
une oxydation au moins partielle du monoxyde de carbone que contient l'écoulement de gaz s'effectue dans le parcours de gaz (17),
**en ce que** du monoxyde de carbone est accumulé dans un absorbeur (34) de monoxyde de carbone disposé dans le parcours de gaz (17) pendant une phase riche de l'unité Multitron (11) et
**en ce que** le monoxyde de carbone accumulé est oxydé en dioxyde de carbone dans le catalyseur (30) d'oxydation de monoxyde de carbone dans une phase pauvre suivante de l'unité Multitron (11) ou par dilution avec de l'air et/ou du gaz d'échappement.

11. Procédé selon la revendication 10, **caractérisé en ce que** l'oxydation au moins partielle du monoxyde de carbone que contient l'écoulement de gaz s'effectue sur un catalyseur (30) d'oxydation du monoxyde de carbone.

12. Procédé selon les revendications 10 ou 11, **caractérisé en ce que** de l'oxygène est apporté sous forme de gaz d'échappement et/ou d'air dans l'écoulement de gaz, en amont du catalyseur (30) d'oxydation du monoxyde de carbone, dans un rapport sous-stoechiométrique par rapport à la teneur en monoxyde de carbone et/ou en hydrogène de l'écoulement de gaz.

13. Procédé selon l'une des revendications 10 à 12, **caractérisé en ce que** l'oxygène est apporté sous la forme de gaz d'échappement et/ou d'air dans l'écoulement de gaz avec un retard par rapport au début d'une phase riche de l'unité Multitron (11).

14. Procédé selon l'une des revendications 10 à 13, **caractérisé en ce que** la quantité d'oxygène apportée par l'air et/ou le gaz d'échappement est régulée en fonction de la température de l'écoulement de gaz et/ou de la température du catalyseur (30) d'oxydation du monoxyde de carbone, de la température de l'unité (16) d'accumulation d'oxyde d'azote et/ou de formation d'ammoniac.

15. Utilisation du procédé selon l'une des revendications 10 à 14, **caractérisée en ce que** le procédé est utilisé dans des moteurs diesel ou des moteurs travaillant en conditions pauvres qui présentent un système (10) de production d'agent de réduction.
